(19) Europäisches Patentamt
European Patent Office
Office européen des brevets

(11) Veröffentlichungsnummer : **0 436 791 B1**

(12) # EUROPÄISCHE PATENTSCHRIFT

(45) Veröffentlichungstag der Patentschrift : **12.01.94 Patentblatt 94/02**

(51) Int. Cl.[5] : **B01D 19/04,** C11D 3/37

(21) Anmeldenummer : **90121086.4**

(22) Anmeldetag : **03.11.90**

(54) **Mittel zum Entschäumen wässriger, insbesondere alkalischer Zubereitungen.**

(30) Priorität : **16.11.89 DE 3938109**

(43) Veröffentlichungstag der Anmeldung : **17.07.91 Patentblatt 91/29**

(45) Bekanntmachung des Hinweises auf die Patenterteilung : **12.01.94 Patentblatt 94/02**

(84) Benannte Vertragsstaaten : **BE DE FR GB IT NL**

(56) Entgegenhaltungen :
**EP-A- 0 163 398**
**EP-A- 0 163 541**
**EP-A- 0 257 356**
**EP-A- 0 301 531**

(73) Patentinhaber : **Th. Goldschmidt AG**
**Goldschmidtstrasse 100**
**D-45127 Essen (DE)**

(72) Erfinder : **Berger, Roland, Dr.**
**Spelbergs Busch 6**
**W-4630 Bochum 6 (DE)**
Erfinder : **Sucker, Roland**
**Berliner Strasse 69**
**W-4712 Werne (DE)**
Erfinder : **Keup, Michael, Dr.**
**Rüttenscheider Strasse 73**
**W-4300 Essen 1 (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Mittel zum Entschäumen wäßriger, insbesondere alkalischer Zubereitungen.

Die Erfindung betrifft insbesondere ein Mittel zum Entschäumen wäßriger Waschflotten, welches vorzugsweise einem Slurry aus Buildern und filmbildenden Polymeren zugesetzt und nach dessen Sprühtrocknung dem Waschmittel zugemischt wird.

Es stellt sich häufig die Aufgabe, wäßrige Zubereitungen und insbesondere solche mit einem pH-Wert > 8 wirksam und dauerhaft zu entschäumen. Solche wäßrigen Zubereitungen werden zum Beispiel in der Textilindustrie und der Färberei eingesetzt. Auch die Galvanik bedient sich häufig alkalischer Bäder. Weitere Einsatzmöglichkeiten alkalibeständiger Entschäumer gibt es bei der Herstellung von Fertigmörtel- oder Zementmischungen.

Eine der wichtigsten Anwendungen für alkaliresistente Entschäumer liegt in der Entschäumung von Waschflotten, wobei der Entschäumer dem pulverförmigen Waschmittel zugesetzt wird. Während eine gewisse Schaummenge durchaus erwünscht ist, stören größere Mengen Schaum den Waschvorgang. Diese Schaumbildung ist vor allem bei der Verwendung der Waschmittel in üblichen Haushaltswaschmaschinen unerwünscht. Es hat sich aber als nachteilig herausgestellt, daß die üblichen Entschäumer in dem alkalischen Waschmittel im Laufe der Lagerung ihre Wirksamkeit ganz oder aber doch in einem solchen Ausmaß verlieren, daß ihre entschäumende Wirkung nicht mehr zur Unterdrückung und/oder Dämpfung der Schaumbildung ausreicht.

Um die Wirksamkeit der dem Waschmittel zugesetzten Entschäumer auch über längere Lagerzeiten zu gewährleisten, sind verschiedene Verfahren erarbeitet worden, die dies ermöglichen sollen. Ein Überblick über die geeigneten Verfahren wird von G.C. Sawicki in Journ. Amer. Oil Chem. Soc. 65, 1013 (1988) gegeben.

Die DE-A-34 36 194 beschreibt ein Verfahren zur Herstellung eines schüttfähigen Entschäumergranulates durch Sprühtrocknen einer wäßrigen, filmbildende Polymere enthaltenden Entschäumerdispersion, mit dem Kennzeichen, daß man zwecks Herstellung eines Granulates der Zusammensetzung

a) 1 bis 10 Gew.-% wasserunlöslicher Entschäumer,

b) 0,2 bis 2 Gew.-% eines Gemisches aus Natriumcarboxymethylcellulose und Methylcellulose im Gewichtsverhältnis 80 : 20 bis 40 : 60,

c) 70 bis 90 Gew.-% an anorganischen, in Wasser löslichen oder dispergierbaren Trägersalzen,

d) Rest Wasser,

eine 0,5 bis 8 Gew.-% des Celluloseethergemisches b) enthaltende Lösung bei einer Temperatur von 15 bis 60°C so lange quellen läßt, bis die Viskosität der Lösung mindestens 75 % der Viskosität beträgt, die bei vollständiger Quellung der Celluloseetherlösung gemessen wird, in dieser Lösung den Entschäumer a) dispergiert und nach Zusatz der Trägersalze und gegebenenfalls Wasser die homogenisierte Dispersion sprühtrocknet. Hierdurch sollte erreicht werden, daß der Entschäumer umhüllt und somit gegen Inaktivierung durch Fremdstoffe geschützt wird, ohne daß die Zubereitung oberflächenaktive Dispergier- oder Emulgiermittel enthält. Den Beispielen ist zu entnehmen, daß als anorganische, in Wasser lösliche oder dispergierbare Trägersalze, u.a. Natriumsilicat (Wasserglas) und Natriumcarbonat, geeignet sind. Dies bedeutet aber, daß bereits während der Herstellung eines schüttfähigen Entschäumergranulates, das zur Einmischung in pulverförmige Waschmittel geeignet ist, die Entschäumer dem Angriff starker Alkalien ausgesetzt sind und gegenüber diesen Alkalien beständig sein müssen. Es hat sich jedoch gezeigt, daß auch durch dieses Verfahren eine ausreichende Stabilisierung der Wirksamkeit herkömmlicher Entschäumer nicht gewährleistet wird.

Die EP-A-0 163 398 betrifft ein Verfahren zur Schaumkontrolle eines Waschmittels durch Zugabe eines Entschäumungsmittels, bestehend aus

A) 1 bis 75 Gew.-% eines Methylpolysiloxans mit einer Viskosität von 10 000 bis 200 000 cSt bei 25°C,

B) 15 bis 87 Gew.-% eines Methylpolysiloxans einer Viskosität von 100 bis 5000 cSt,

C) 2 bis 20 Gew.-% eines Siliconharzes aus Trimethylsiloxy- und $SiO_{4/2}$-Einheiten (sogenanntes MQ-Harz) und

D) 4 bis 30 Gew.-% amorpher Kieselsäure mit einer Oberfläche von 50 bis 400 $m^2/g$.

Auch dieses Produkt sollte vorzugsweise auf eine Art in das Waschmittel eingearbeitet werden, daß es von den alkalischen Bestandteilen des Waschmittels getrennt wird, z.B. durch Adsorption an Füllstoff oder Verkapselung.

Antischaummittel, die dem Waschmittelslurry vor dem Versprühen des Slurrys zugesetzt werden können, sind auch in der EP-A-0 301 531 beschrieben. Diese Antischaummittel beruhen auf der Grundlage von im wesentlichen linearem Organopolysiloxan, im wesentlichen aus Triorganosiloxy- und $SiO_{4/2}$-Einheiten aufgebautem Siliconharz (MQ-Harz) sowie Füllstoffen, mit dem Kennzeichen, daß in mindestens einem Teil des im wesentlichen linearen Organopolysiloxans zusätzlich zu den SiC-gebundenen organischen Resten gleiche oder verschiedene, SiOC-gebundene, aus Kohlenstoff- und Wasserstoffatomen und/oder aus Kohlenstoff-, Wasserstoff- und mindestens zwei Sauerstoffatome je Rest sowie gegebenenfalls auch mindestens einem Si-Atom

aufgebaute Reste mit jeweils mindestens 6 Kohlenstoffatomen je Rest vorliegen und, daß es, bezogen auf das Gewicht von im wesentlichen linearem Organopolysiloxan, Siliconharz und Füllstoff, maximal 10 Gew.-% 2,2,4-Trimethyl-1,3-diisobutyryloxypentan enthält. Die Mischung der Bestandteile wird in Gegenwart alkalisch reagierender Verbindungen, wie methanolischer KOH-Lösung, 2 bis 3 Stunden auf Temperaturen von 150°C oder mehr erhitzt.

Bei diesen Verfahrensbedingungen kann eine zumindest teilweise Äquilibrierung der siliciumorganischen Bestandteile unterstellt werden.

Ein ähnliches Verfahren zur Herstellung von Entschäumern kann der EP-A-0 169 500 entnommen werden. Dieses Verfahren umfaßt das Erhitzen eines Gemisches aus

A) einem bei 20°C flüssigen Polydimethylsiloxan,

B) einem räumlich vernetzten Polysiloxanharz mit einem Molekulargewicht von 1000 bis 10 000, das aus Strukturelementen der allgemeinen Formel

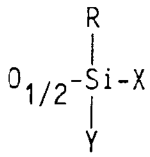

besteht, worin R zu 40 bis 100 Mol-% aus einem Phenyl-, Phenyl- ethyl- oder Alkylrest mit 2 bis 8 Kohlenstoffatomen und zu 0 bis 60 Mol-% aus einem $CH_3$-Rest, X und Y unabhängig voneinander aus den Resten R, OH, $O_{1/2}$, $CH_3$ oder $OC_nH_{2n-1}$ mit n = 1 bis 4

bestehen, mit der Maßgabe, daß der Anteil der OH-Gruppen 0,1 bis 10 Gew.-%, bezogen auf das Polysiloxanharz, beträgt,

in Gegenwart eines basischen Katalysators und eines organischen, mit den Reaktionspartnern nicht reaktionsfähigen, zwischen 80 und 200°C siedenden Lösungsmittels auf Temperaturen oberhalb 80°C, bis die Viskosität nach Durchlaufen einer Induktionsperiode stetig ansteigt, worauf man das erhaltene Blockpolymerisat mit

C) einem gegebenenfalls silanierten Siliciumdioxid-Aerogel vermischt und erhitzt, mit dem Kennzeichen, daß man die Umsetzung von 95 bis 65 Gewichtsteilen der Komponente A) mit 5 bis 35 Gewichtsteilen der Komponente B) in Gegenwart von 25 bis 40 Gew.-%, bezogen auf das Reaktionsgemisch, des Lösungsmittels innerhalb eines Zeitraumes von 0,5 bis 3 Stunden durchführt, bis das vom Lösungsmittel befreite Reaktionsgemisch eine Viskosität von 1000 bis 5000 mPas aufweist, worauf man die Umsetzung durch Desaktivierung des Katalysators abstoppt, das Lösungsmittel entfernt und das entstandene Blockmischpolymerisat nach Zumischen von 1 bis 10 Gewichtsteilen der Komponente C) auf Temperaturen von 120 bis 220°C erhitzt, bis die Viskosität des Produktes auf 10 000 bis 16 000 mPas gestiegen ist.

Es hat sich jedoch bei allen Entschäumungsmitteln des Standes der Technik gezeigt, daß die Entschäumerwirkung nach Verarbeitung zu einem schüttfähigen Entschäumergranulat nach DE-A-34 36 194 mehr oder weniger stark abnimmt, so daß nach wie vor dem Fachmann die Aufgabe gestellt ist, insbesondere im Hinblick auf ihre Wirksamkeit verbesserte Entschäumer für Waschmittel, insbesondere feste Waschmittel zu entwikkein.

Die vorliegende Erfindung befaßt sich deshalb mit dem technischen Problem der Entschäumung wäßriger, insbesondere alkalischer Zubereitungen, wie sie in vielen Bereichen der Technik verwendet werden. Sie befaßt sich insbesondere mit der Entschäumung wäßriger Waschflotten, wobei die Entschäumer einem Slurry aus Buildern und filmbildenden Polymeren zugesetzt und nach dessen Sprühtrocknung dem Waschmittel zugemischt werden.

Gegenstand der Erfindung ist ein neues Entschäumungsmittel, welches erhältlich ist durch

a) Vermischen von

a1) 75 bis 96 Gew.-% eines Siliconöles mit einer Viskosität I von 50 bis 100 000 mPas,

a2) 1 bis 5 Gew.-% eines organomodifizierten Polysiloxans der allgemeinen Formel

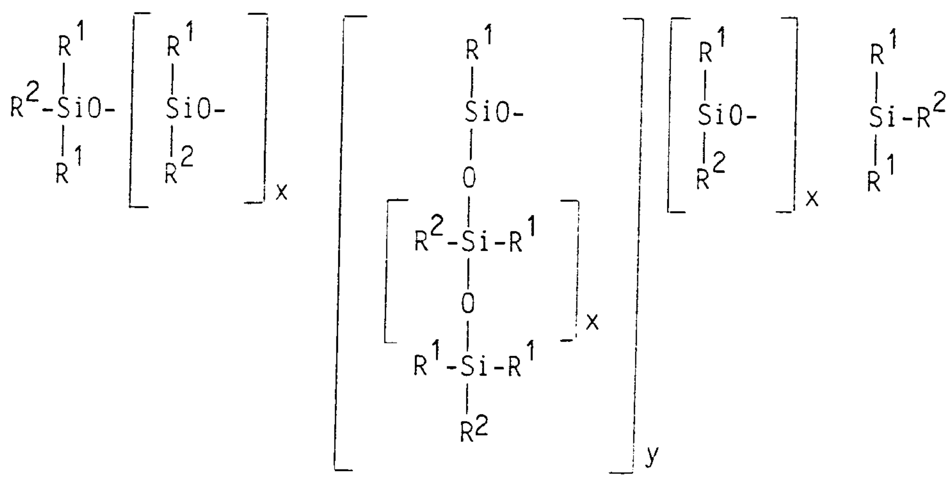 II

wobei

$R^1$ im polymeren Molekül gleich oder verschieden sein kann und einen Alkylrest mit 1 bis 22 Kohlenstoffatomen oder einen Phenylrest bedeutet, mit der Bedingung, daß mindestens 80 % der Reste $R^1$ Methylreste sind,

$R^2$ im polymeren Molekül gleich oder verschieden sein kann und aus folgenden Resten ausgewählt ist:

$R^1$ ;

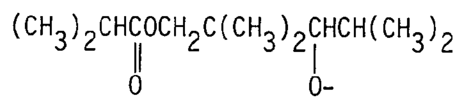 ;

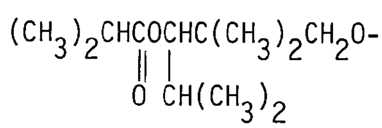 ;

$R^3$ $(OC_nH_{2n})_m$-Z-, wobei

$R^3$ ein Wasserstoffrest oder Alkylrest mit 1 bis 8 Kohlenstoffatomen ist,

Z ein zweiwertiger Rest der Formel
-O-$(CH_2)_p$- oder -O- oder
-O-$CH_2CH(CH_3)CH_2$- ist,
p = 2 oder 3,

n im mittleren Molekül einen Wert von 2,8 bis 4,0 und

m einen Wert von 15 bis 100 hat,

x einen durchschnittlichen Wert von 4 bis 100 und

y einen Wert von 0 bis 10 hat, mit der Bedingung, daß mindestens 1 Rest $R^2$ ungleich $R^1$ ist,

a3) 0 bis 5 Gew.-% eines Alkoxypolysiloxans der Formel

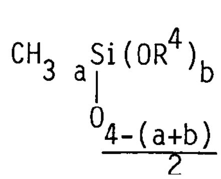 III

wobei

$R^4$ ein Alkylrest mit 1 bis 4 Kohlenstoffatomen ist,

a einen Wert von 1,0 bis 1,95,

b einen Wert von 0,05 bis 2,25 und

Σ a + b einen Wert von 1,4 bis 3,25 hat,

a4) 2 bis 15 Gew.-% feinteiliger Kieselsäure, IV mit der Maßgabe, daß der Gehalt an a2) und a3) mindestens 2 Gew.-% beträgt,

und

b) anschließendem Erhitzen des Gemisches auf 120 bis 220°C über eine Zeitdauer von 1 bis 10 Stunden in Gegenwart an sich bekannter alkalischer Äquilibrierungskatalysatoren.

Die Komponente I ist ein Siliconöl einer Viskosität von 50 bis 100 000 mPas. Bevorzugt ist schon aus wirtschaftlichen Gründen ein Methylpolysiloxan, in dem gegebenenfalls bis zu 10 % der Methylreste durch Phenylreste ersetzt sind. Das Siliconöl hat eine bevorzugte Viskosität von 100 bis 60 000 mPas.

Von besonderer Bedeutung ist die Art des organomodifizierten Polysiloxans II.

Der Rest $R^1$ kann im polymeren Molekül gleich oder verschieden sein. Der Rest $R^1$ bedeutet einen Alkylrest mit 1 bis 22 Kohlenstoffatomen, vorzugsweise den Methylrest, oder einen Phenylrest, wobei jedoch mindestens 80 % der Reste $R^1$ Methylreste sein müssen. So können beispielsweise 95 % der Reste $R^1$ Methylreste sein, während die restlichen 5 % Phenylreste oder, bevorzugt, langkettige Alkylreste mit bis zu 22 Kohlenstoffatomen sein können. Durch die Auswahl der geeigneten Alkylreste kann in gewissen Grenzen die Oleophilie des organomodifizierten Polysiloxans beeinflußt und die entschäumende Wirkung optimiert werden.

Der Rest $R^2$ kann wiederum im polymeren Molekül gleich oder verschieden sein. Der Rest $R^2$ kann die Bedeutung des Restes $R^1$ haben, jedoch muß mindestens ein Rest $R^2$ eine der folgenden Bedeutungen haben: Der Rest $R^2$ kann ein Alkoxyrest eines Alkohols, der im Handel unter der Bezeichnung Texanol erhältlich ist, sein und einer der beiden Formeln entsprechen, wobei im Texanol beide Strukturen enthalten sind:

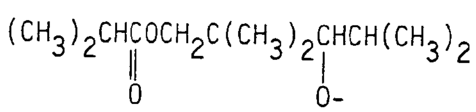

oder

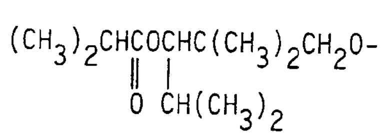

.

Der Rest $R^2$ kann ferner die Bedeutung eines Polyetherrestes der Formel $R^3(OC_nH_{2n})_m$-Z- haben. $R^3$ ist dabei ein Wasserstoff- oder ein Alkylrest mit 1 bis 8 Kohlenstoffatomen, vorzugsweise ein Wasserstoffrest oder ein Alkylrest mit 1 bis 4 Kohlenstoffatomen. Z ist ein zweiwertiger Rest, der den Polyetherrest mit dem Siloxangerüst verbindet. Ist Z ein Rest der Formel $-O-(CH_2)_p-$ oder $-O-CH_2CH(CH_3)CH_2-$, erfolgt die Verknüpfung über eine SiC-Bindung. Diese ist wegen ihrer Hydrolysestabilität bevorzugt. Besonders bevorzugt ist der Rest Z, bei dem p einen Wert von 3 hat. Diese Verknüpfung liegt dann vor, wenn bei der Herstellung des organomodifizierten Polysiloxans ein Polyoxyalkylenallylether an eine SiH-Gruppe des gerüstbildenden Polysiloxans angelagert worden ist. Z kann aber auch die Bedeutung eines Sauerstoffrestes -O- haben. In diesem Fall erfolgt die Verknüpfung über eine SiOC-Bindung.

Der Index n hat im polymeren Molekül einen durchschnittlichen Wert von 2,8 bis 4. Das bedeutet, daß als Oxyalkyleneinheiten nebeneinander Oxyethylen-, Oxypropylen- und Oxybutyleneinheiten vorliegen können.

In den Verbindungen der allgemeinen Formel II bezieht sich der Index x auf die difunktionellen Siloxyeinheiten, der Index y auf die trifunktionellen Einheiten. x hat einen Wert von 4 bis 100, vorzugsweise von 10 bis 50; y hat einen Wert von 0 bis 10, vorzugsweise einen Wert von 0 bis 5.

Die dritte Komponente III ist ein Alkoxypolysiloxan der allgemeinen Formel

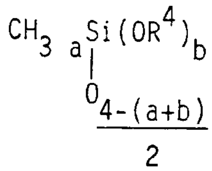

wobei

$R^4$ ein Alkylrest mit 1 bis 4 Kohlenstoffatomen, insbesondere ein Methyl- oder Ethylrest ist,

a einen Wert von 1,0 bis 1,95,

b einen Wert von 0,05 bis 2,25 und

Σ a + b einen Wert von 1,4 bis 3,25 hat.

Vorzugsweise hat a einen Wert von 1,1 bis 1,45 und b einen Wert von 0,8 bis 1,5 und die Summe a + b einen Wert von 1,9 bis 3,0.

Es handelt sich somit um ein verzweigtes Alkoxypolysiloxan. Solche Produkte sind aus dem Stand der Technik als der Hydrolyse und Kondensation zugängliche Harzvorprodukte bekannt. Sie werden durch Umsetzung von Halogensilangemischen mit Wasser/Alkohol-Gemischen hergestellt. Die eingesetzten Alkoxypolysiloxane III enthalten keine Q-Einheiten.

Als feinteilige Kieselsäure IV wird die aus dem Stand der Technik bekannte und beschriebene Kieselsäure mit einer spezifischen Oberfläche von etwa 50 bis 400 $m^2/g$ verwendet.

Das Gemisch der Bestandteile a1) bis a4) wird vorzugsweise mit einem scherkraftreichen Rührer homogenisiert.

Das im Patentanspruch beschriebene Gemisch wird 1 bis 10 Stunden, insbesondere 1 bis 3 Stunden, auf 120 bis 220°C, vorzugsweise 150 bis 220°C, in Gegenwart von alkalischen Äquilibrierungskatalysatoren erhitzt. Beispiele geeigneter Äquilibrierungskatalysatoren sind NaOH, KOH, Alkalialkoholate, wie $NaOCH_3$, $NaOC_2H_5$, $LiOCH_3$, quaternäre Ammoniumsalze, quaternäre Phosphoniumsalze, Kaliumamid, Amine und Amingemische. Zum Stand der Technik wird hier auf das Buch "Chemie und Technologie der Silicone" von Walter Noll, Verlag Chemie, 1960, Seite 145, verwiesen.

Ein bevorzugtes erfindungsgemäßes Mittel ist, wie aus den obigen Erläuterungen zur Bedeutung der Reste und Indices hervorgeht, dadurch gekennzeichnet, daß im organomodifizierten Polysiloxan II die Reste die folgenden Bedeutungen und die Indices die folgenden Werte aufweisen:

$R^1$ = Methyl;

$R^2$ = 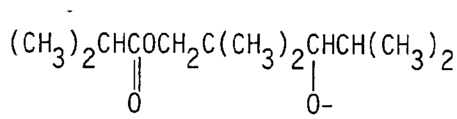

oder

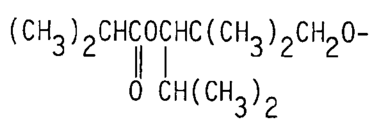

oder

$H(OC_nH_{2n})_m$-Z-;

Z = -O-$(CH_2)_3$- oder -O-;

m = 15 bis 50;

x = 10 bis 50;

y = 0 bis 5.

Weiter bevorzugt ist ein Mittel, bei dem im Alkoxypolysiloxan III die Reste und Indices folgende Bedeutung bzw. Werte haben:

$R^4$ = Ethylrest,

a = 1,1 bis 1,45,

b = 0,8 bis 1,5.

Beispiele geeigneter organomodifizierter Polysiloxane II und Alkoxypolysiloxane III lassen sich durch die folgenden Formeln wiedergeben:

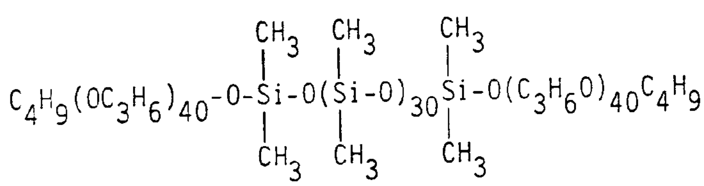

x = 15, y = 0, n = 3, m = 40, Z = -O-, $R^3$ = $C_4$-Alkyl

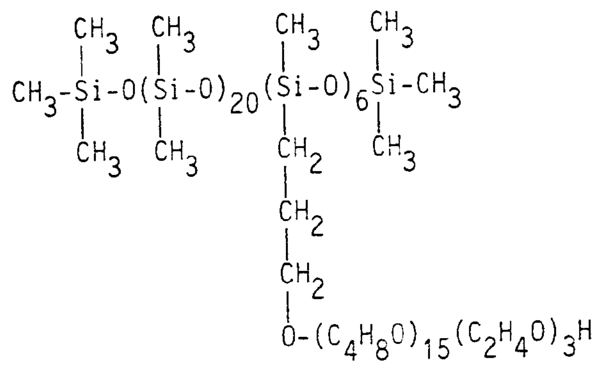

x = 13, y = 0, n = 3,67, m = 18, Z = $-O(CH_2)_3-$, $R^3$ = H

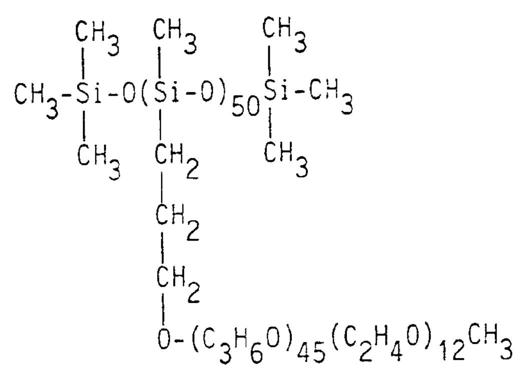

x = 25, y = 0, n = 2,79, m = 57, Z = $-O(CH_2)_3-$, $R^3$ = $CH_3$

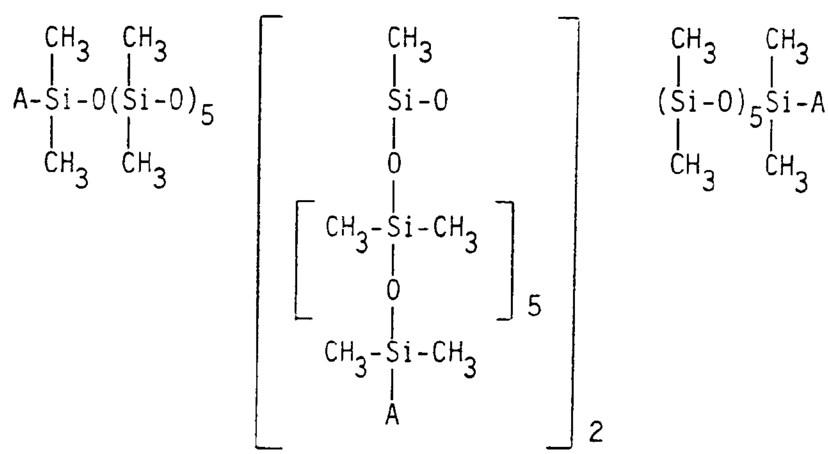

A = 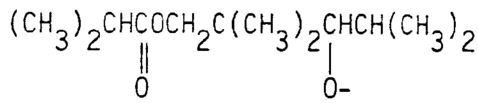 oder 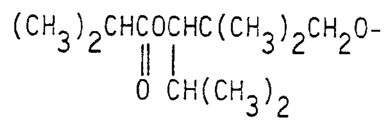

x = 5, y = 2

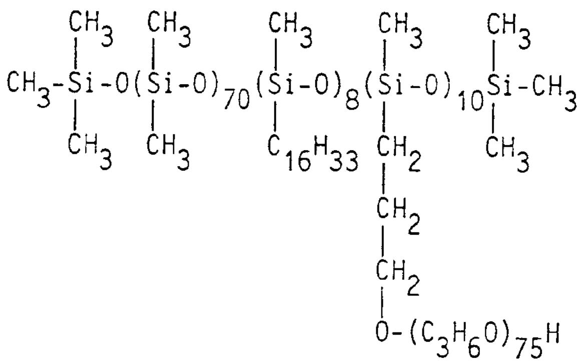

x = 44, y = 0, n = 3, m = 75, Z = $-O(CH_2)_3-$, $R^3$ = H

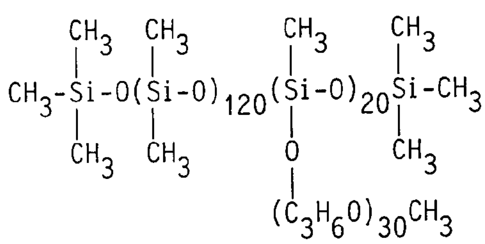

x = 70, y = 0, n = 3, m = 30, Z = -O-, $R^3$ = $CH_3$

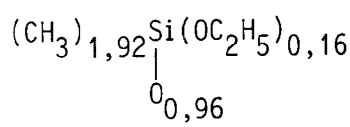

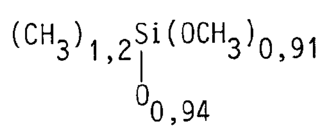

Das erfindungsgemäße Mittel kann als solches oder in Form einer wäßrigen Emulsion verwendet werden. Dabei soll die disperse Phase in einer Menge von 5 bis 50 Vol.-% vorliegen.

Soll das erfindungsgemäße Mittel zur Entschäumung wäßriger Waschflotten dienen und wird es dem Slurry zugesetzt, ist das wasserfreie Mittel bevorzugt.

Wird das erfindungsgemäße Mittel für technische Zwecke z.B. als Textil- oder Färbereihilfsmittel eingesetzt, empfiehlt sich wegen der besseren Dosier- und Mischbarkeit die Verwendung von wäßrigen Dispersionen der erfindungsgemäßen Mittel.

Im Falle der Verwendung der Mittel zur Entschäumung wäßriger Waschflotten wird das erfindungsgemäße Entschäumungsmittel einem im wesentlichen aus Wasser, Wasserglas, Natriumsulfat, Natriumtripolyphosphat oder Natriumcarbonat und Celluloseethern bestehenden Slurry zugesetzt.

Dieser Slurry wird anschließend sprühgetrocknet. Das entstehende pulverförmige Granulat kann dann in der entsprechenden Menge dem Waschpulver zugemischt werden.

Vorzugsweise wird das erfindungsgemäße Entschäumungsmittel in Form des zuvor beschriebenen sprühgetrockneten Pulvers dem Waschmittel in einer Menge von 0,05 bis 0,5 Gew.-% (Entschäumungsmittel bezogen auf Waschmittel) zugesetzt.

Die erfindungsgemäßen Entschäumungsmittel erweisen sich unter stark alkalischen Verarbeitungsbedingungen stabiler und wirksamer als die Vergleichsprodukte aus dem Stand der Technik. Dies wird auch durch die folgenden Vergleichsversuche belegt. In diesen Vergleichsversuchen wird zunächst die Herstellung der erfindungsgemäßen Entschäumer und sodann deren entschäumende Wirkung beschrieben und mit bekannten Entschäumern des Standes der Technik verglichen.

I Herstellung erfindungsgemäßer Entschäumungsmittel

Beispiel 1

In einem Reaktionsgefäß werden 920 Gew.-Teile Siliconöl I einer Viskosität von 5000 mPas eingewogen und mit 15 Gew.-Teilen eines Polyetherpolysiloxans II folgender Kennzahlen x = 6,5, y = 0, Z = $-O(CH_2)_3$, $R^3$ = $C_4H_9$, n = 2, 9, und m = 30, 15 Gew.-Teilen eines Alkoxypolysiloxans III folgender Kennzahlen: a = 1,92, b = 0,16 sowie 50 Gew.-Teilen einer feinteiligen pyrogenen Kieselsäure IV (BET-Oberfläche: 200 $m^2/g$) und 7 Gew.-Teilen einer 20 %igen methanolischen KOH-Lösung gemischt und unter Rühren 5 h auf 150°C erhitzt.

Beispiel 2

Mischung und Verfahrensweise gemäß Beispiel 1, jedoch mit dem Unterschied, daß anstelle des Polyetherpolysiloxans II ein anderes Polyetherpolysiloxan mit den Kennzahlen x = 29, y = 0, $R^3$ = H, n = 2,9, m = 30, Z = $-O(CH_2)_3$ und ein anderes Alkoxypolysiloxan III mit den Kennzahlen a = 1,2, b = 0,91 verwendet wird.

Beispiel 3

Mischung und Verfahrensweise wie unter Beispiel 1 beschrieben, jedoch mit dem Unterschied, daß das eingesetzte Siliconöl I eine Viskosität von ca. 6100 mPas aufweist und durch Mischen gleicher Gew.-Teile eines Siliconöls der Viskosität 100 mPas und eines Siliconöls der Viskosität 60 000 mPas hergestellt wird.

Beispiel 4

Mischung und Verfahrensweise wie unter Beispiel 2 beschrieben, jedoch mit dem Unterschied, daß die Reaktionsmischung 2 h bei 150°C belassen wird.

Beispiel 5

In einem Reaktionsgefäß werden 460 Gew.-Teile Siliconöl I einer Viskosität von 60 000 mPas mit 460 Gew.-Teilen Siliconöl I der Viskosität 100 mPas mit 30 Gew.-Teilen eines estermodifizierten Polysiloxans II, Kennzahlen: x = 5, y = 2, $R^2$ =

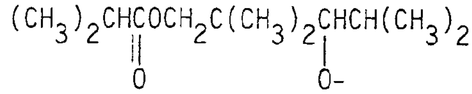

und

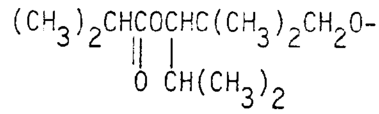

im Verhältnis von 1 : 1 und 50 Gew.-Teilen einer feinteiligen Fällungskieselsäure IV (BET-Oberfläche: 170 $m^2/g$) und 7 Gew.-Teilen einer 20 %igen ethanolischen KOH-Lösung gemischt und unter Rühren 2 h auf 150°C erhitzt.

Beispiel 6

Mischung und Verfahrensweise wie unter Beispiel 5, jedoch mit dem Unterschied, daß anstelle des estermodifizierten Polysiloxans II ein Polyetherpolysiloxan II mit den Kennzahlen x= 5, y = 2, $R^2 = R^3(OC_nH_{2n})_m$-Z- ($R^3 = C_4H_9$, n = 3, m = 30, Z = -O-) eingesetzt wird.

II Herstellung von nicht erfindungsgemäßen Entschäumungsmitteln als Vergleichsprodukte

Beispiel 7

In einem Reaktionsgefäß werden 475 Gew.-Teile eines Siliconöls der Viskosität 60 000 mPas mit 475 Gew.-Teilen eines Siliconöls der Viskosität 100 mPas und 50 Gew.-Teilen feinteiliger pyrogener Kieselsäure gemischt und nach Zusatz von 7 Gew.-Teilen einer 20 %igen methanolischen KOH-Lösung unter Rühren auf 150°C erhitzt.

Beispiel 8

Dem nach Vergleichsbeispiel 7 erhaltenen Entschäumungsmittel werden bei Raumtemperatur 30 Gew.-Teile des Polyetherpolysiloxans nach Beispiel 1 beigemischt.

Beispiel 9

In einem Reaktionsgefäß werden 650 Gew.-Teile eines Siliconöls der Viskosität von 5000 mPas mit 300 Gew.-Teilen eines Polyetherpolysiloxans (Kennzahlen: x = 22, y = 0, $R^3$ = H, Z = $-O(CH_2)_3-$, n = 2,6, m = 30) und mit 50 Gew.-Teilen einer feinteiligen pyrogenen Kieselsäure gemischt und unter Rühren 2 h auf 150°C erhitzt.

Beispiel 10

(nach EP-A-0 301 531)

A) Herstellung des SiOC-Organopolysiloxans

650 g eines α,ω-bis-Hydroxypolydimethylsiloxans einer Viskosität von 80 mPas bei 25°C, 220 g 2-Octyldodecanol und 4,5 g 20 gew.-%ige methanolische KOH-Lösung werden vermischt und auf 140°C erwärmt, wobei das durch die Kondensation entstehende Wasser kontinuierlich abdestilliert wird. Nach dem Abkühlen wird mit Dimethyldichlorsilan neutralisiert, 18 g Natriumhydrogencarbonat zugegeben und über Natriumsulfat getrocknet und schließlich filtriert. Das so erhaltene Öl hat eine Viskosität von ca. 180 mPas bei 25°C. Aus NMR-Messungen ergibt sich ein Gehalt des Öls an 2-Octyldodecylgruppen von 23,5 Gew.-%.

B) Entschäumergrundlage

1 Gew.-Teil des gemäß A) hergestellten Öls wird mit 2 Gew.-Teilen einer 50 gew.-%igen Lösung von MQ-Harz in Toluol vermischt, wobei das MQ-Harz zu 40 Mol-% aus Trimethylsiloxy- und zu 60 Mol-% aus $SiO_{4/2}$-Einheiten besteht. Von diesem Gemisch werden bei 120°C und einem Druck von 100 kPa bis zu 1,6 kPa (abs.) flüchtige Bestandteile abdestilliert. Erhalten wird ein Öl mit einer Viskosität von 3200 mPas bei 25°C. Nach $^{29}$Si-NMR-Messungen enthält das Öl 23,9 % Trimethylsiloxy- und 37 Mol-% $SiO_{4/2}$-Einheiten.

Eine Mischung aus 89,3 Gew.-Teilen eines α,ω-bis-Trimethylsilylpolydimethylsiloxans einer Viskosität von

5000 mPas, 5 Gew.-Teilen der gemäß B) hergestellten Entschäumergrundlage, 5 Gew.-Teilen einer pyrogen hergestellten hochdispersen Kieselsäure einer BET-Oberfläche von ca. 300 $m^2/g$ und 0,7 Gew.-Teilen einer 20 gew.-%igen methanolischen KOH-Lösung wird 2 h lang bei 150°C gehalten und nach dem Abkühlen homogenisiert. Man erhält ein Entschäumungsmittel einer Viskosität von ca. 25 600 mPas bei 25°C.

Beispiel 11

(nach EP-A-0 163 398)

In einem Reaktionsgefäß werden 300 Gew.-Teile Siliconöl einer Viskosität von 60 000 mPas mit 525 Gew.-Teilen eines Siliconöls der Viskosität von 100 mPas und 140 Gew.-Teilen eines Siliconharzes (50 %ig) mit einem $(CH_3)_2SiO_{1/2}$ zu $SiO_{2/2}$-Verhältnis von 0,6 : 1 gemischt und das Lösungsmittel im Vakuum entfernt. Nach dem Zusatz von 105 Gew.-Teilen einer feinteiligen Fällungskieselsäure wird unter Rühren 4 h auf 200°C erhitzt.

III Überprüfung der Entschäumungsmittel

Zur Überprüfung der Wirksamkeit der Entschäumungsmittel werden zunächst in einer ersten Versuchsreihe 5 Gew.-Teile des Entschäumungsmittels mit 95 Gew.-Teilen Natriumsulfat in einem Mörser innig gemischt. 150 g eines handelsüblichen, aber entschäumerfreien Waschmittels werden mit 4,5 g der Entschäumermischung (entsprechend 0,15 % Entschäumer) versetzt und in der Waschmaschine (Hauptwaschgang für Kochwäsche bis 95°C) auf Schaumbildung geprüft. Es wird eine Schaumzahl ermittelt, die der Fläche unter der gemessenen Schaumhöhen/Zeitkurve direkt proportional ist.

Für eine zweite Überprüfungsreihe der Wirksamkeit der erfindungsgemäßen Entschäumungsmittel werden diese entsprechend der DE-A-34 36 194 in einem Slurry, bestehend aus Celluloseethern, Wasserglas, Natriumtripolyphosphat, Natriumsulfat und Wasser, dispergiert. Dieser Slurry wird in Abänderung der Vorschrift der DE-OS 34 36 194 nicht sprühgetrocknet, sondern bei 200°C 75 Min. lang getrocknet und anschließend gemahlen. Das erhaltene Pulver wird ebenfalls dem entschäumerfreien Waschmittel entsprechend einer Konzentration von 0,15 % Entschäumungsmittel zugesetzt und in der Waschmaschine während eines Hauptwaschganges die Wirksamkeit geprüft.

Die Tabelle faßt die erhaltenen Schaumzahlen zusammen. Es ist erkennbar, daß die erfindungsgemäßen Entschäumungsmittel in ihrer Wirksamkeit bei Ausprüfung aus der Verreibung mit Natriumsulfat den Vergleichsprodukten entsprechen. Deutliche Verbesserungen der Wirksamkeit ergeben sich für die erfindungsgemäßen Entschäumungsmittel jedoch unter den sehr stark alkalischen Bedingungen des Slurry's gemäß DE-A-34 36 194. Die erfindungsgemäßen Entschäumungsmittel sind daher insbesondere für alkalische Waschflotten in der Waschmaschine und die Textilveredlung geeignet.

| Ergebnisse | aus Natriumsulfat-Verreibung | verarbeitet gemäß DE-OS 34 36 194 |
|---|---|---|
| e r f i n d u n g s g e m ä ß | | |
| Beispiel 1 | 19,7 | 15,4 |
| Beispiel 2 | 13,7 | 8,0 |
| Beispiel 3 | 19,1 | 13,0 |
| Beispiel 4 | 14,2 | 12,1 |
| Beispiel 5 | 25,1 | 23,9 |
| Beispiel 6 | 22,7 | 15,4 |
| n i c h t erfindungsgemäß | | |
| Beispiel 7 | 15,6 | 45,3 |
| Beispiel 8 | 34,3 | 38,5 |
| Beispiel 9 | 40,7 | Überschäumen der Waschmaschine mit Flottenverlust |
| Beispiel 10 (nach EP-A- 0 301 531) | 18,6 | 72,6 |
| Beispiel 11 (nach EP-A- 0 163 398) | 21,1 | 68,6 |

## Patentansprüche

1. Mittel zum Entschäumen wäßriger, insbesondere alkalischer Zubereitungen, erhältlich durch
   a) Vermischen von
      a1) 75 bis 96 Gew.-% eines Siliconöles mit einer Viskosität von 50 bis 100 000 mPas,
      a2) 1 bis 5 Gew.-% eines organomodifizierten Polysiloxans der allgemeinen Formel

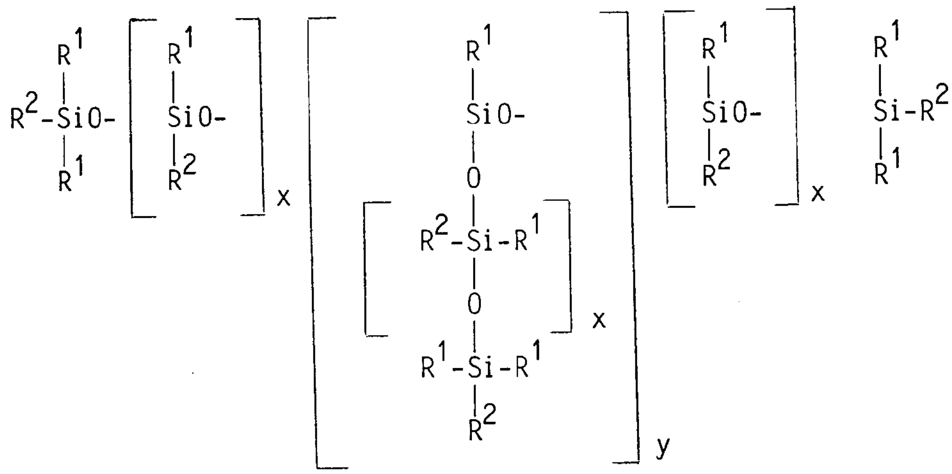

wobei

$R^1$ im polymeren Molekül gleich oder verschieden sein kann und einen Alkylrest mit 1 bis 22 Kohlenstoffatomen oder einen Phenylrest bedeutet, mit der Bedingung, daß mindestens 80 % der Reste $R^1$ Methylreste sind,

$R^2$ im polymeren Molekül gleich oder verschieden sein kann und aus folgenden Resten ausgewählt ist:

$R^1$ ;

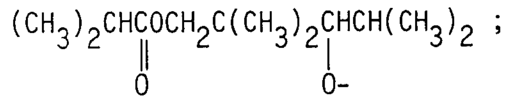

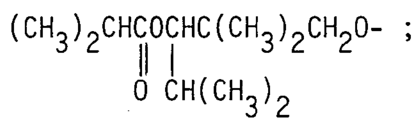

$R^3(OC_nH_{2n})_m$-Z-, wobei

$R^3$ ein Wasserstoffrest oder Alkylrest mit 1 bis 8 Kohlenstoffatomen ist,

Z ein zweiwertiger Rest der Formel $-O-(CH_2)_p-$ oder -O- oder $-OCH_2CH(CH_3)CH_2-$ ist, p = 2 oder 3,

n im mittleren Molekül einen Wert von 2,8 bis 4,0 und

m einen Wert von 15 bis 100 hat,

x einen durchschnittlichen Wert von 4 bis 100 und

y einen Wert von 0 bis 10 hat, mit der Bedingung, daß mindestens 1 Rest $R^2$ ungleich $R^1$ ist,

a3) 0 bis 5 Gew.-% eines Alkoxypolysiloxans der Formel

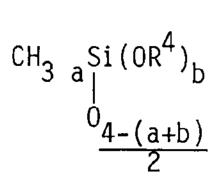

wobei

$R^4$ ein Alkylrest mit 1 bis 4 Kohlenstoffatomen ist,

a einen Wert von 1,0 bis 1,95,
b einen Wert von 0,05 bis 2,25 und
Σ a + b einen Wert von 1,4 bis 3,25 hat,
a4) 2 bis 15 Gew.-% feinteiliger Kieselsäure,
mit der Maßgabe, daß der Gehalt an a2) und a3) mindestens 2 Gew.-% beträgt,
und
b) anschließendem Erhitzen des Gemisches auf 120 bis 220°C über eine Zeitdauer von 1 bis 10 Stunden in Gegenwart an sich bekannter alkalischer Äquilibrierungskatalysatoren.

**2.** Mittel nach Anspruch 1, dadurch gekennzeichnet, daß das Siliconöl eine Viskosität von 100 bis 60 000 mPas hat.

**3.** Mittel nach Anspruch 1 oder 2, dadurch gekennzeichnet, daß im organomodifizierten Polysiloxan die Reste die folgenden Bedeutungen und die Indices die folgenden Werte aufweisen:
$R^1$ = Methyl;

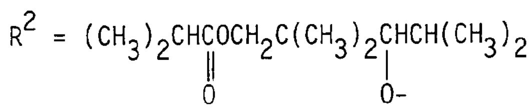

oder

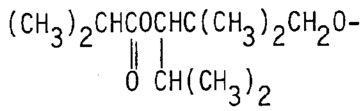

oder

$H(OC_nH_{2n})_m$-Z- ;

Z = $-O-(CH_2)_3-$ oder -O- ;
m = 15 bis 50;
x = 10 bis 50;
y = 0 bis 5.

**4.** Mittel nach einem der vorhergehenden Ansprüche, dadurch gekennzeichnet, daß es in Form einer wäßrigen Emulsion mit einem Gehalt von 5 bis 50 Vol.-% disperser Phase vorliegt.

**5.** Verwendung der Mittel nach einem oder mehreren der Ansprüche 1 bis 3 zum Entschäumen wäßriger Waschflotten.

**6.** Verwendung der Mittel nach Anspruch 5, dadurch gekennzeichnet, daß die Mittel einem Slurry aus Buildern und filmbildenden Polymeren zugesetzt werden, der nach Sprühtrocknung dem Waschmittel zugesetzt wird.

## Claims

**1.** Agent for defoaming aqueous, in particular alkaline, preparations, obtainable by
a) mixing
a1) from 75 to 96% by weight of a silicone oil having a viscosity of from 50 to 100,000 mPas,
a2) from 1 to 5% by weight of an organo-modified polysiloxane of the general formula

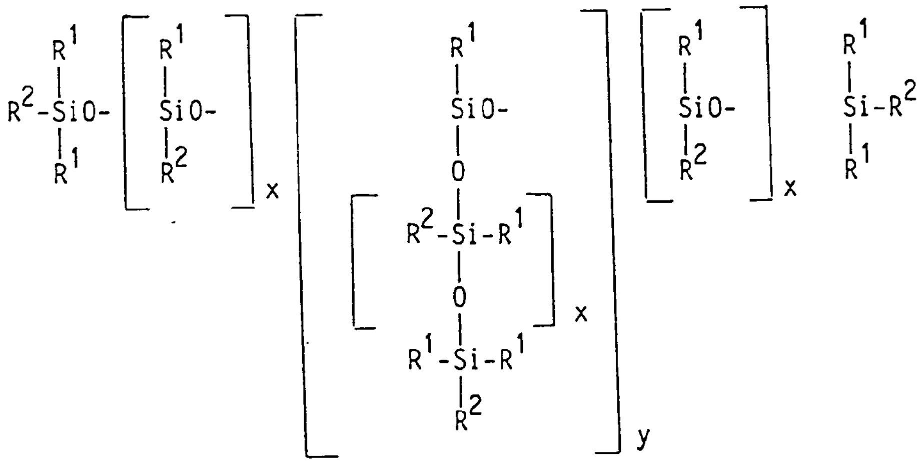

where

$R^1$ may be identical or different in the polymeric molecule and is an alkyl radical having 1 to 22 carbon atoms or a phenyl radical, with the proviso that at least 80% of the $R^1$ radicals are methyl radicals,

$R^2$ may be identical or different in the polymeric molecule and is selected from the following radicals:

$R^1$;

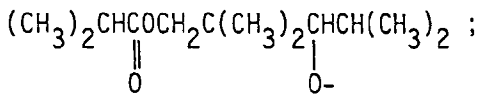

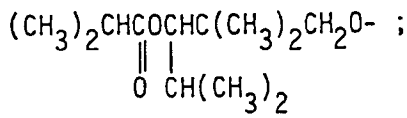

or $R^3(OC_nH_{2n})_m$-Z-, where

$R^3$ is a hydrogen radical or an alkyl radical having 1 to 8 carbon atoms,

Z is a divalent radical of the formula $-O-(CH_2)_p-$or - O- or $-OCH_2CH(CH_3)CH_2-$, where

p = 2 or 3,

n in the average molecule has a value of from 2.8 to 4.0, and

m has a value of from 15 to 100,

x has an average value of from 4 to 100, and

y has a value of from 0 to 10,

with the proviso that at least one radical

$R^2$ is not identical with $R^1$,

a3) from 0 to 5% by weight of an alkoxypolysiloxane of the formula

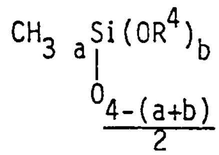

where

$R^4$ is an alkyl radical having 1 to 4 carbon atoms,
a has a value of from 1.0 to 1.95,
b has a value of from 0.05 to 2.25, and
$\Sigma$ a+b has a value of from 1.4 to 3.25,
a4) from 2 to 15% by weight of finely divided silicic acid,
with the proviso that the content of a2) and a3) is at least 2% by weight,
and
b) subsequently heating the mixture at from 120 to 220°C for a period of from 1 to 10 hours in the presence of alkaline equilibration catalysts known er se.

2. Agent according to Claim 1, characterized in that the silicone oil has a viscosity of from 100 to 60,000 mPas.

3. Agent according to Claim 1 or 2, characterized in that the radicals in the organo-modified polysiloxane have the following meanings and the indices have the following values:
$R^1$ = methyl;
$R^2$ =

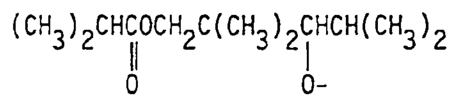

or

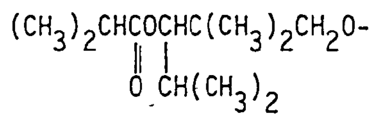

or

$H(OC_nH_{2n})_m-Z-$;

Z = $-O-(CH_2)^3-$ or -O-;
m = 15 to 50;
x = 10 to 50;
y = 0 to 5.

4. Agent according to one of the preceding claims, characterized in that it is in the form of an aqueous emulsion containing from 5 to 50% by volume of disperse phase.

5. Use of the agents according to one or more of Claims 1 to 3 for defoaming aqueous wash liquors.

6. Use of the agents according to Claim 5, characterized in that the agents are added to a slurry of builders and film-forming polymers which, after spray drying, is added to the detergent.

## Revendications

1. Produit anti-mousse pour préparations aqueuses, notamment alcalines, caractérisé en ce que le produit est obtenu par
a) le mélange de
a1) 75 à 96% en poids d'une huile de silicones avec une viscosité de 50 à 100000 mPas,
a2) 1 à 5% en poids d'un polysiloxane modifié organiquement de formule générale

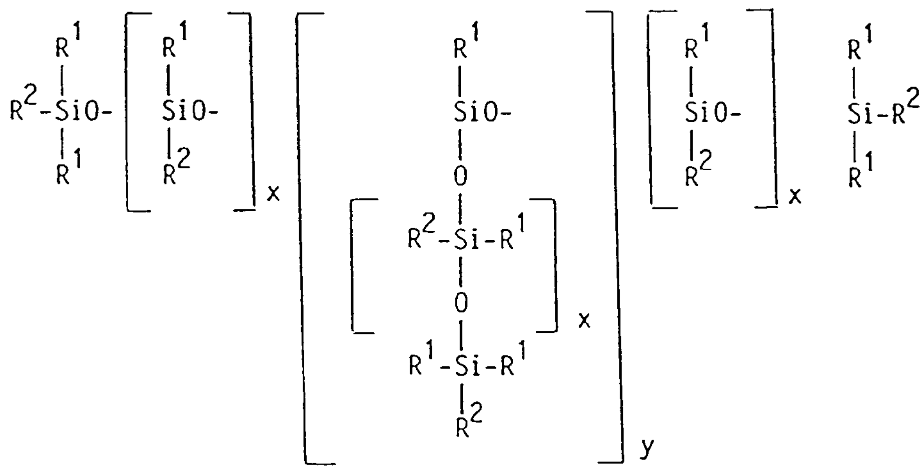

où

R1 peut être égal ou différent dans la molécule polymère et correspond à un résidu alkyle avec 1 à 22 atomes de carbone ou à un résidu phenyle, avec la condition que 80% du résidu R1 soit un résidu méthyle,

R2 peut être égal ou différent dans la molécule polymère et est choisi parmi les résidus suivants:

R1 ;

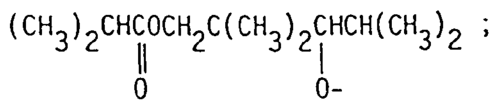

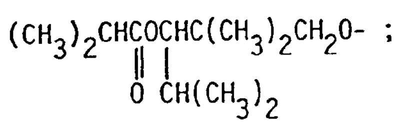

$R_3(OC_nH_{2n})_m$ -Z-,

où

R3 est un résidu aqueux ou un résidu alkyle avec 1 à 8 atomes de carbone,

Z est un résidu bivalent de formule

$-O-(CH_2)_p-$ ou -O-ou

$-OCH_2CH(CH_3)CH_2-$

p = 2 ou 3

n a une valeur de 2,8 à 4,0 dans une molécule moyenne

et

m a une valeur de 15 à 100,

x a une valeur moyenne de 4 à 100 et

y a une valeur de 0 à 10,

avec la condition qu'au moins un résidu R2 soit différent de R1,

a3) 0 à 5% en poids d'un alkoxypolysiloxane de formule

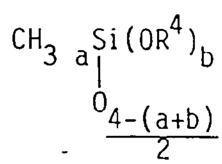

où

| | |
|---|---|
| R4 | est un résidu alkyle avec 1 à 4 atomes de carbone, |
| a | a une valeur de 1,0 à 1,95, |
| ba | est une valeur de 0,05 à 2,25 et |
| Σ a + b | est une valeur de 1,4 à 3,25, |

a4) 2 à 15% en poids d'acide silicique, dans la mesure où la teneur en a2) et a3) s'élève au moins à 2% en poids,

et

b) le chauffage à la suite dudit mélange à une température de 120 à 220°C pendant 1 à 10 heures en présence de catalyseurs d'équilibrage alcalins connus en soi.

2. Produit selon la revendication 1, caractérisé en ce que l'huile de silicone a une viscosité de 100 à 60 000 mPas.

3. Produit selon la revendication 1 ou 2, caractérisé en ce que, dans le polysiloxane modifié organiquement, les résidus présentent la signification suivante :

R1 = méthyle ;

$R^2$ = 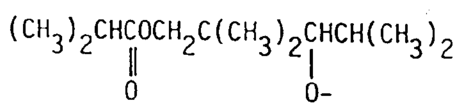

ou

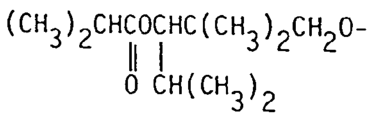

ou

$H(OC_nH_{2n})_m$-Z- ;

| | | |
|---|---|---|
| Z | = $-O-(CH_2)_3-$ | ou -O- ; |
| m | = 15 à 50 ; | |
| x | = 10 à 50 ; | |
| y | = 0 à 5. | |

4. Produit selon l'une quelconque des revendications précédentes, caractérisé en ce qu'il se présente sous forme d'une émulsion aqueuse avec une teneur de 5 à 50 % en volume de phase dispersée.

5. Utilisation du produit selon l'une ou plusieurs des revendications 1 à 3 pour écumer la mousse des bains détergents.

6. Utilisation du produit selon la revendication 5, caractérisée en ce que le produit est additionné à une bouillie d'adjuvants et de polymères filmogènes, qui après séchage par pulvérisation est additionnée au produit de lavage.